# EUROPÄISCHE PATENTSCHRIFT

(11) **EP 2 349 876 B1**
(45) Veröffentlichungstag und Bekanntmachung des Hinweises auf die Patenterteilung: **28.11.2012**
(21) Anmeldenummer: 09782528.5
(22) Anmeldetag: 03.09.2009
(51) Int. Cl.: B65G 15/08, B65G 17/02

(54) **FÖRDERBAND FÜR EINE STRECKENFÖRDERANLAGE AUF TRAGSEILEN ODER LÄNGSSCHIENEN**
CONVEYOR BELT FOR A HAULAGE SYSTEM ON CARRIER CABLES OR LONGITUDINAL RAILS
BANDE TRANSPORTEUSE POUR UN CONVOYEUR À TRONÇONS SUR DES CÂBLES PORTEURS OU DES RAILS LONGITUDINAUX

(30) Priorität: 16.10.2008 DE 102008037457
(43) Veröffentlichungstag der Anmeldung: 03.08.2011
(73) Patentinhaber: ContiTech Transportbandsysteme GmbH, 30165 Hannover (DE)
(72) Erfinder: MÖSCHEN, Michael, 37176 Nörten-Hardenberg (DE)
(74) Vertreter: Finger, Karsten
(86) Internationale Anmeldenummer: PCT/EP2009/061364
(87) Internationale Veröffentlichungsnummer: WO 2010/043445

(56) Entgegenhaltungen:
- DE-C- 502 639
- GB-A- 737 338
- US-A- 2 838 164
- US-A- 3 557 941
- US-A- 3 615 152
- US-A- 4 351 431

## Beschreibung

Die Erfindung betrifft ein Förderband für eine Streckenförderanlage mit einem langgestreckten, aus elastomerem Werkstoff bestehenden flachen Fördergurt, an dem in Längsrichtung hintereinander angeordnete Querbalken befestigt sind, die mit Tragmitteln, insbesondere drehbar gelagerte Laufrollen ausgestattet sind, die auf gespannten, abgestützten Tragseilen oder aufgeständerten Längsschienen ablaufen.

Ein solches gattungsbildendes Förderband ist aus der EP 0 745 545 A2 bekannt, in der eine Förderanlage zum Transport von Fördergütern über lange Strecken mittels eines Förderbandes beschrieben wird. Dieses in sich geschlossene Förderband weist einen sich in Förderrichtung erstreckenden, aus elastomerem Werkstoff bestehenden Fördergurt sowie voneinander beabstandete Balken auf, die quer zur Förderrichtung auf dem Fördergurt, also auf der das Fördergut aufnehmendenTragseite, befestigt sind. An den beiden freien Enden des jeweiligen Balkens ist je eine Rolle drehbar gelagert angeordnet, die auf längs geführten Tragseilen abrollen. Diese Tragseile sind in an sich bekannter Weise parallel zur Längserstreckung des Förderbandes ausgerichtet und werden von entsprechenden Tragwerken gerührt, gespannt und gehalten.

Neben den quer zur Förderrichtung des Förderbandes auf dem Fördergurt angeordneten Balken verfügt das Förderband über eine rechts- und eine linksseitige Seitenwand, die im Wesentlichen senkrecht auf der Tragseite des Fördergurtes befestigt sind. Dadurch weist das Förderband in der Praxis bis zu 6 m lange kastenförmige Transportbereiche auf, in denen das Fördergut, z. B. Schüttgut, rutschsicher aufnehmbar ist.

Dieser Aufbau des Förderbandes erlaubt zwar einerseits sehr vorteilhaft einen effektiven Transport von Materialien über vergleichsweise große Strecken, andererseits ist dieser Aufbau aber auch mit einer Reihe von Nachteilen verbunden. So sind die Herstellkosten des komplettierten Förderbandes nicht gering, da der Fördergurt und die Wellkanten getrennt voneinander hergestellt werden müssen. Danach muss der Fuß der jeweiligen Wellkante abschnittsweise auf dem Fördergurt befestigt werden, was bei den großen Längen von oft mehreren Kilometern ein hoher Aufwand ist. Zudem ist der Materialaufwand für die Wellkanten wegen deren Wellengeometrie vergleichsweise hoch. Dieser hohe Materialaufwand führt auch zu einem sehr hohen Gesamtgewicht des Förderbandes. Außerdem entstehen hohe Verpackungskosten zum Versand des Förderbandes in einer Vielzahl von Teillängen.

Zusätzlich wird die Verbindung zwischen Wellenkante und Fördergurt durch das Fördergut und die Dehnungskräfte bei den Trommelumläufen stark beansprucht. Es kann dadurch zu Undichtigkeiten und letztlich zur Ablösung der Wellenkante kommen.

Aus der DE 502 639 ist ein Förderband mit einem Fördergurt bekannt, der in einzelne Bandstücke unterteilt ist. Die einzelnen Bandstücke enthalten an ihrem vorderen und an ihrem hinteren Ende jeweils einen Wagen, die jeweils über einen Einzelantrieb verfügen und über gekreuzte Zugmittel miteinander verbunden sind. Die einzelnen Wagen sind in Querrichtung durch trogförmige Querbalken miteinander verbunden. Durch das Aufteilen des Fördergurtes in einzelne Bandstücke kann der Fördergurt einfach über Umlenktrommeln geführt werden, ohne dass sich in den einzelnen Bandstücken große Dehnungskräfte aufbauen. Daher ist eine Beschädigung der einzelnen Bandstücke aufgrund hoher Dehnungskräfte nahezu ausgeschlossen. Es ist jedoch festzustellen, dass das aus der DE 502 639 bekannte Förderband aufgrund der einzelnen Bandstücke und aufgrund der einzelnen Wagen, die über einen Einzelantrieb verfügen, aufwendig zu fertigen ist.

Aus der US 3,615,152 ist ein Förderband mit einem flachen, endlosen in sich geschlossenen Fördergurt bekannt, der über separate Trägerrollen geführt wird. Der Fördergurt weist in seinem Mittelbereich Festigkeitsträger in Form von sich längs erstreckenden Stahlseilen und in den Seitenbereichen Festigkeitsträger in Form einer Gewebelage mit gekreuzten Fäden auf. Der Fördergurt wird über Tragrollen geführt, die so angeordnet sind, dass der Fördergurt eine trogförmige Form aufweist. Hierbei liegt der Mittelbereich des Fördergurtes, in dem die Stahlseile liegen, eben im Bereich einer mittleren Tragrolle, wohingegen die Seitenbereiche des Fördergurtes durch die seitlichen Tragrollen nach oben aufgestellt werden. Auf die Seitenbereiche des Fördergurtes wirken große Dehnungskräfte, wenn der Fördergurt Umlenktrommeln überfährt. Diese Dehnungskräfte führen jedoch nicht zu einer Beschädigung der Seitenbereiche, da die dortige Gewebeeinlage sowohl durch ihre Formgebung als auch durch ihre Materialeigenschaften den Dehnungskräften nachgeben kann. Im mittleren Bereich der mittleren Trägerrolle wird der Fördergurt hingegen nicht gedehnt, so dass dort Stahlseile als Festigkeitsträger vorgesehen werden können.

Der Erfindung liegt die Aufgabe zugrunde, ein gattungsgemäßes Förderband für Streckenförderanlagen zu schaffen, bei dem das Fördergut seitlich sicher gehalten wird, wobei dieser sichere Halt einfacher herstellbar und mit geringerem Aufwand am Fördergurt realisiert ist.

Die Aufgabe wird erfindungsgemäß wird durch um Förderband gemäß Anspruch 1 gelöst.

Jeder Querbalken bildet in der Stirnansicht gesehen eine Mulden- oder Trogform bzw. eine symmetrische, nach unten gestaltete Kröpfung, bei der sich die seitlichen Bereiche unter einem Winkel nach oben erstrecken. An den Querbalken sind die auf den Tragseilen oder Längsschienen ablaufenden Tragmittel, insbesondere Laufrollen, angeordnet. Durch die feste Verbindung des an sich flachen Fördergurtes mit diesen muldenförmig verlaufenden Querbalken bilden sich ein horizontaler Bodenabschnitt und zwei seitlich unter einem der Förderaufgabe angepassten Winkel, in der Regel größer als 90°, erstreckende Seitenbereiche des Fördergurtes. Der Fördergurt wird also in seinen Seitenbereichen nach oben abgeknickt. Dadurch wird auf jeder Seite des Förderbandes eine schräge Seitenwand gebildet, die das Fördergut, beispielsweise Schüttgut sicher auf dem Förderband hält.

Erfindungsgemäß fallen separate Seitenwände ersatzlos weg. Der Fördergurt selbst wird in seinen Randbereichen aufgrund der Befestigung an dem muldenförmigen Querbalken schräg nach oben abgeknickt und bildet somit einen Trog oder Mulde mit unter einem Winkel nach außen verlaufenden Formwänden. Diese Formgebung durch die Querbalken machen separate Seitenwände und Fußteile überflüssig.

Damit die Seitenbereiche bzw. seitlichen Muldenwände auch hohe Seitenkräfte durch das Transportgut aufnehmen können, ist vorgesehen, dass in den gemuldeten Seitenbereichen des Fördergurtes durchgehende Gewebeeinlagen als Verstärkungen vorhanden sind. Diese textilen Gewebeeinlagen sind während des Aufbaus des aus elastomerem Werkstoff bestehenden Fördergurtes durch Vulkanisation eingebettet.

In Ausbildung der Erfindung sind die Querbalken aus je einem stabilen, festen Formbügel gebildet.

Werden die Formbügel in die Unterseite des Fördergurtes eingelassen, wird ein störungsfreies Übergleiten über die Rollen- oder Gleitstrecken an den Tragwerken erreicht.

In vorteilhafter Ausgestaltung der Erfindung weisen die Querbalken zusätzliche Tragrollen auf, die das Förderband beim Überfahren des jeweiligen Tragstützenbereichs der Streckenförderanlage durch Auflaufen auf diesen anheben. Die Tragrollen heben das Förderband in den Tragstützenbereichen an, so dass die unten angebrachten Formbügel das Überfahren dieser Bereiche nicht behindern.

Durch die erfindungsgemäße Ausbildung wird der Materialeinsatz beim Aufbau eines Förderbandes gegenüber einem Förderband mit bekannten Wellkanten und der Montageaufwand gegenüber den bekannten Seitenwänden deutlich reduziert.

Es ist möglich, den als Formbügel 11 ausgeführten Querbalken in entsprechende Nuten der Unterseite 19 des Fördergurtes 3 einzulassen.

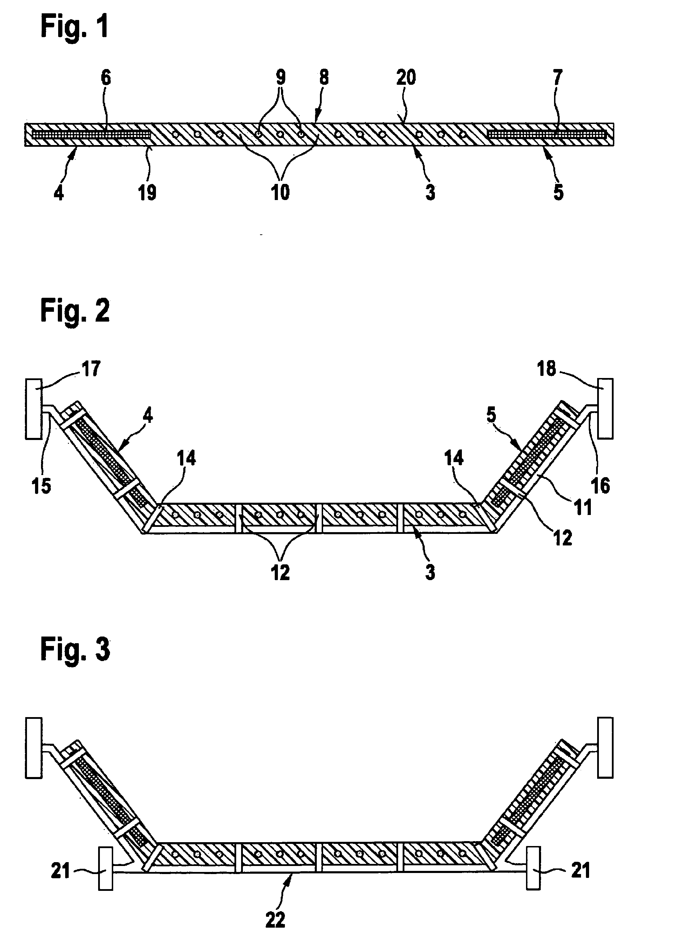

In Fig. 3 wird eine modifizierte Ausführungsform des Förderbandes gezeigt. Hier sind zusätzliche Tragrollen 21 zum Überfahren der Tragstützenbereiche der Streckenförderanlage in horizontaler Erstreckung des horizontalen unteren Bereiches 22 des Formbügels 11 angesetzt. Die Tragrollen 21 heben das Förderband in den Tragstützenbereichen an, so dass die unten angebrachten Formbügel 11 das Überfahren dieser Bereiche nicht behindern.

### Bezugszeichenliste

### (Teil der Beschreibung)

- 3: Fördergurt
- 4: Seitenbereich
- 5: Seitenbereich
- 6: Gewebeeinlage
- 7: Gewebeeinlage
- 8: Mittelbereich
- 9: Stahlseile
- 10: seilfreie Zonen
- 11: Formbügel; Querbalken
- 12: Verbindungen
- 14: Muldenecken
- 15: abgeknicktes Ende
- 16: abgeknicktes Ende
- 17: Laufrolle
- 18: Laufrolle
- 19: Unterseite des Fördergurtes
- 20: Oberseite des Fördergurtes
- 21: Tragrollen
- 22: Unterer Bereich Formbügel

## Patentansprüche

1. Förderband für eine Streckenfördcranlage mit einem langgestreckten, aus elastomerem Werkstoff bestehenden flachen Fördergurt, an dem in Längsrichtung hintereinander angeordnete Querbalken befestigt sind, die mit Tragmitteln, insbesondere drehbar gelagerten Laufrollen, ausgestattet sind, die auf gespannten, abgestützten Tragseilen oder aufgeständerten Längsschienen ablaufen,
**dadurch gekennzeichnet,**
**dass** die Querbalken (11) an der laufseitigen Unterseite (19) oder tragseitigen Oberseite (20) des Fördergurtes (3) befestigt sind und eine, in Laufrichtung gesehen, mulden- oder trogförmig gebogene Form aufweisen, wodurch die Seitenbereiche (4,5) des Fördergurtes (3) sich nach oben öffnend erstrecken, und dass die Festigkeitsträgerlage des Fördergurtes (3) in den Seitenbercichen (4, 5) jeweils eine Gewebeeinlage (6, 7) aufweist und im horizontalen Mittelbereich (8) aus parallelen, sich längs erstreckenden Stahlseilen (9) besteht.

2. Förderband nach Anspruch 1,
**dadurch gekennzeichnet,**
**dass** die Querbalken (11) aus je einem stabilen, festen Formbügel gebildet sind.

3. Förderband nach Anspruch 2,
**dadurch gekennzcichnet,**
dass die Formbügel (11) in Ausnehmungen in der Unterseite (19) oder Oberseite (20) des Fördergurtes (3) eingelassen sind.

4. Förderband nach Anspruch 1,
**dadurch gekennzeichnet,**
**dass** die Querbalken (11) zusätzliche Tragrollen (21) aufweisen, die das Förderband beim Überfahren des jeweiligen Tragstützenbercichs der Streckenförderanlage durch Auflaufen auf diesen anheben.

## Claims

1. Conveying-belt arrangement for a haulage-conveyor installation, having an elongate flat conveying belt which consists of elastomeric material and on which are fastened crossbars which are arranged one behind the other in the longitudinal direction and are provided with load-bearing means, in particular rotatably mounted running rollers, which run on tensioned, supported load-bearing cables or propped-up longitudinal rails,
**characterized**
**in that** the crossbars (11) are fastened on the running-action underside (19) or load-bearing upper side (20) of the conveying belt (3) and are curved in the form of a hollow or trough in the longitudinal direction, as a result of which the side regions (4, 5) of the conveying belt (3) open out in the upward direction, and in that the reinforcement layer of the conveying belt (3), in the side regions (4, 5), has a respective woven-fabric insert (6, 7) and, in the horizontal centre region (8), comprises parallel, longitudinally extending steel cables (9).

2. Conveying-belt arrangement according to Claim 1,
**characterized**
**in that** the crossbars (11) are each formed from a stable, solid shaped bracket.

3. Conveying-belt arrangement according to Claim 2,
**characterized**
**in that** the shaped brackets (11) are incorporated in apertures in the underside (19) or upper side (20) of the conveying belt (3).

4. Conveying-belt arrangement according to Claim 1,
**characterized**
**in that** the crossbars (11) have additional load-bearing rollers (21) which raise the conveying-belt arrangement, during passage of the respective load-bearing-support region of the haulage-conveyor installation, by running onto this region.

## Revendications

1. Bande transporteuse pour un convoyeur à tronçons comprenant une courroie de transport plane allongée constituée d'un matériau élastomère, à laquelle courroie de transport sont fixées des traverses disposées les unes derrière les autres dans la direction longitudinale qui sont équipées de moyens porteurs, en particulier de galets de roulement montés rotatifs qui roulent sur des câbles porteurs tendus supportés ou des rails longitudinaux surélevés,
**caractérisée en ce que**
les traverses (11) sont fixées sur le côté inférieur (19) situé du côté de roulement ou sur le côté supérieur (20) situé du côté porteur de la courroie de transport (3) et présentent, vu dans la direction d'avance, une forme courbe en forme de bac ou d'auge, de sorte que les régions latérales (4, 5) de la courroie de transport (3) s'étendent en étant ouvertes vers le haut et **en ce que** la couche de renforts de la courroie de transport (3) comprend un insert en tissu (6, 7) respectif dans les régions latérales (4, 5) et est constituée, dans la région centrale horizontale (8), de câbles en acier (9) parallèles s'étendant longitudinalement.

2. Bande transporteuse selon la revendication 1,
**caractérisée en ce que**
les traverses (11) sont formées à partir d'une armature stable et solide respective.

3. Bande transporteuse selon la revendication 2,
**caractérisée en ce que**
les armatures (11) sont intégrées dans des évidements dans le côté inférieur (19) ou le côté supérieur (20) de la courroie de transport (3).

4. Bande transporteuse selon la revendication 1,
**caractérisée en ce que**
les traverses (11) comprennent des galets porteurs (21) supplémentaires qui soulèvent la bande transporteuse lors du passage sur la région de montant porteur respective du convoyeur à tronçons en roulant sur celle-ci.
